(19) Europäisches Patentamt
European Patent Office
Office européen des brevets

(11) EP 4 343 897 A1

(12) **EUROPEAN PATENT APPLICATION**
published in accordance with Art. 153(4) EPC

(43) Date of publication:
**27.03.2024 Bulletin 2024/13**

(21) Application number: **22939745.0**

(22) Date of filing: **14.09.2022**

(51) International Patent Classification (IPC):
***H01M 4/62*** *(2006.01)* ***H01M 10/0567*** *(2010.01)*
***H01M 10/0525*** *(2010.01)*

(52) Cooperative Patent Classification (CPC):
Y02E 60/10

(86) International application number:
**PCT/CN2022/118744**

(87) International publication number:
**WO 2023/206921 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2022 CN 202210443679**

(71) Applicant: **Huizhou Highpower Technology Co., Ltd.**
**Huizhou, Guangdong 516000 (CN)**

(72) Inventors:
- **ZHANG, Changming**
**Guangdong 516000 (CN)**
- **HU, Dalin**
**Guangdong 516000 (CN)**
- **LIAO, Xingqun**
**Guangdong 516000 (CN)**
- **LI, Feng**
**Guangdong 516000 (CN)**

(74) Representative: **Mirlach, Xiaolu**
**Giechstraße 5**
**81249 München (DE)**

# (54) LITHIUM-ION BATTERY

(57) A lithium-ion battery includes a positive electrode plate, a negative electrode plate, a separator, and an electrolyte; the positive electrode plate includes a positive electrode current collector and a positive electrode material, the positive electrode material includes a lithium supplement additive $Li_xM_yO_z$, which is selected from one or more of the following formulas I-V; and/or one or more of halogenated compounds of the following formulas I-V;

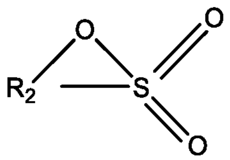

Formula I

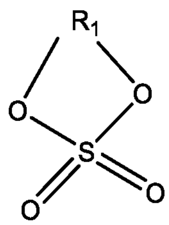

Formula II

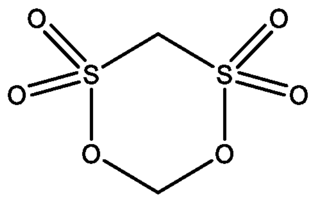

Formula III

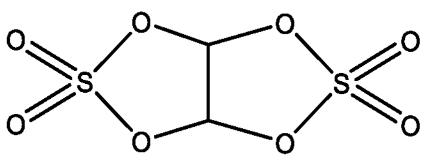

Formula IV

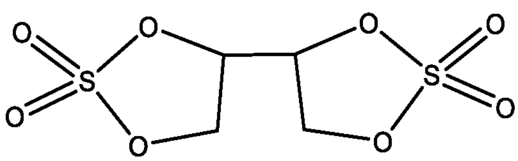

Formula V

where, in formula I, R1 is selected from one of substituted or unsubstituted C1-6 alkylene group and substituted or

EP 4 343 897 A1

unsubstituted C2-6 alkenylene group;in formula II, R2 is selected from one of substituted or unsubstituted C1-6 alkylene group and substituted or unsubstituted C2-6 alkenylene group.

## Description

Technical field

The present present invention relates to the field of secondary battery technology, in particular to a lithium-ion battery.

Background

Lithium-ion batteries are widely used in consumer electronics and power batteries due to their high specific energy, good fast charging and discharging capabilities, and small self-discharge. The operating conditions of electronic products and power batteries are becoming increasingly complex, and the requirements for lithium-ion batteries are also increasing, especially for battery capacity and lifespan.

The performance of lithium-ion batteries is a key factor affecting their market popularity. The performance of lithium-ion batteries is influenced by multiple indicators, among which energy density and cycle performance are two particularly critical indicators. Currently, lithium-ion batteries are unable to withstand high charging voltages, and their high-temperature storage and cycle performance may deteriorate under high charging voltages.

Summary of the invention

The purpose of the present invention is to provide a lithium-ion battery to improve its high-temperature storage and cycle performance.

The present invention discloses a lithium-ion battery, including:

a positive electrode plate, a negative electrode plate, a separator, and an electrolyte;
the positive electrode plate includes a positive electrode current collector and a positive electrode material, the positive electrode material includes a lithium supplement additive $Li_xM_yO_z$, where $1 \leq x \leq 6$, $1 \leq y \leq 6$, $2 \leq z \leq 12$, and M includes one or more of Ni, Co, Fe, Cu, Al, Mn, Ti, P, Si, C;
the lithium supplement additive $Li_xM_yO_z$ includes one or more types;
the electrolyte includes a sulfur containing additive, which is selected from one or more of the following formulas I-V; and/or
one or more of halogenated compounds of the following formulas I-V;

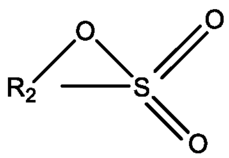

Formula I

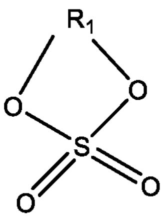

Formula II

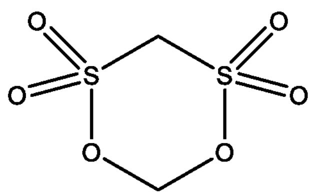

Formula III

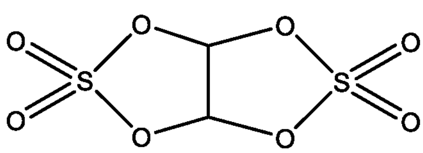

Formula IV

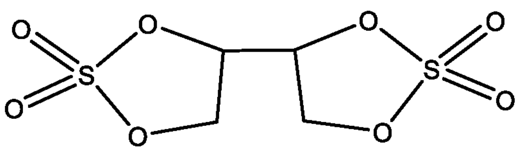

Formula V

where, in formula I, R1 is selected from one of substituted or unsubstituted C1-6 alkylene group and substituted or unsubstituted C2-6 alkene group;
in formula II, R2 is selected from one of substituted or unsubstituted C1-6 alkylene group and substituted or unsubstituted C2-6 alkene group.

Optionally, the mass proportion of the lithium supplement additive in the positive electrode material is 0.01-10%.

Optionally, the mass proportion of the sulfur containing additive in the electrolyte is 0.01-10%.

Optionally, the mass proportion of the sulfur containing additive in the electrolyte is 0.05-5%.

Optionally, the lithium supplement additive is $Li_5FeO_4$, and the mass proportion of Li5FeO4 in the positive electrode plate is 1%; the sulfur containing additive is 1,3-propane sultone, and the mass proportion of 1,3-propane sultone in the electrolyte is 2%.

Optionally, the mass proportion of the total content of S element in the positive electrode plate and the negative electrode plate is not less than 100ppm.

Optionally, the mass proportion of the positive electrode active material in the positive electrode material is 80-99%.

Optionally, the concentration of lithium salts in the electrolyte ranges from 0.5M to 2M.

Optionally, the concentration of lithium salts in the electrolyte ranges from 0.9M to 1.3M.

Optionally, the mass proportion of the lithium supplement additive in the positive electrode material is 1%.

The lithium-ion battery of the present invention significantly improves its first efficiency with the addition of lithium supplement additive $Li_xM_yO_z$ to the positive electrode plate, and the first efficiency increases with the increase of the addition amount. The introduction of sulfur containing additives can participate in the formation of SEI films. When sulfur containing additives are used together with lithium supplement additive $Li_xM_yO_z$, it can significantly improve the thermal stability of the battery, especially the high-temperature storage and cycle performance. This is mainly related to lithium supplement additives which improve the first efficiency and sulfur containing additives which protect the positive electrode surface. Lithium supplement additives improve the first efficiency, and the introduction of sulfur containing additives can participate in the formation of SEI films. The two work synergistically to improve the first efficiency of the battery and generate a passivation film at the positive electrode. The passivation film has good thermal stability in extreme environments, effectively stabilizing the system, and improving high-temperature performance and high-temperature cycle performance.

Detailed description

It should be understood that the terminology used here, the specific structure and functional details disclosed are only for the purpose of describing specific embodiments and are representative. However, the present invention can be specifically implemented through many alternative forms and should not be interpreted as limited solely to the embodiments described here.

The following provides a detailed explanation of the present invention with reference to optional embodiments.

As an embodiment of the present invention, a lithium-ion battery is disclosed, including: a positive electrode plate, a negative electrode plate, a separator, and an electrolyte; the positive electrode plate includes a positive electrode current collector and a positive electrode material, the positive electrode material includes a lithium supplement additive $Li_xM_yO_z$, where $1 \le x \le 6$, $1 \le y \le 6$, $2 \le z \le 12$, and M includes one or more of Ni, Co, Fe, Cu, Al, Mn, Ti, P, Si, C;

the lithium supplement additive $Li_xM_yO_z$ includes one or more types; the electrolyte includes a sulfur containing additive, which is selected from one or more of the following formulas I-V; and/or

one or more of halogenated compounds of the following formulas I-V;

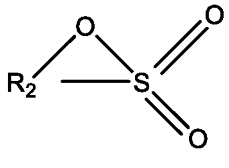

Formula I

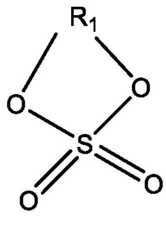

Formula II

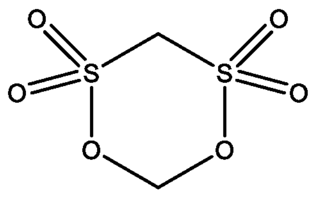

Formula III

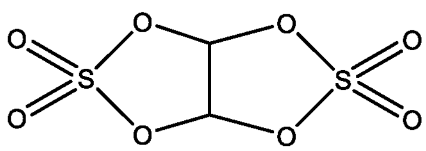

Formula IV

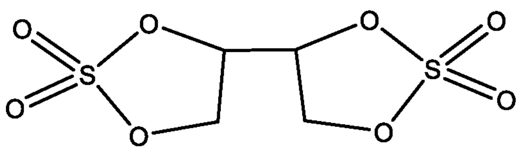

Formula V

where, in formula I, R1 is selected from one of substituted or unsubstituted C1-6 alkylene group and substituted or

unsubstituted C2-6 alkene group;

in formula II, R2 is selected from one of substituted or unsubstituted C1-6 alkylene group and substituted or unsubstituted C2-6 alkene group.

Specifically, the positive electrode plate includes the positive electrode current collector and the positive electrode material coated on the surface of the positive electrode current collector. The positive electrode current collector can be aluminum foil, etc. The positive electrode material include positive electrode active materials, conductive agents, adhesives, and lithium supplement additives.

Optionally, the mass proportion of lithium supplement additives in the positive electrode material is 0.01-10%. For example, it can be 0.01%, 0.05%, 0.08%, 0.1%, 0.13%, 0.17%, 2%, 2.6%, 3%, 3.4%, 4%, 4.7%, 5%, 6%, 7%, 8%, 9%, and 10%.

Optionally, the mass proportion of sulfur containing additives in the electrolyte is 0.01-10%. For example, it can be 0.01%, 0.05%, 0.08%, 0.1%, 0.13%, 0.17%, 2%, 2.6%, 3%, 3.4%, 4%, 4.7%, 5%, 6%, 7%, 8%, 9%, and 10%.

Optionally, the mass proportion of sulfur containing additives in the electrolyte is 0.05-5%. For example, it can be 0.1%, 0.2%, 0.5%, 1%, 1.5%, 2%, 2.5%, 3%, 3.5%, 4%, 4.5%, and 5%.

Optionally, the lithium supplement additive is $Li_5FeO_4$, and the mass proportion of $Li_5FeO_4$ in the positive electrode material is 1%; The sulfur containing additive is 1,3-propane sultone, and the mass proportion of 1,3-propane sultone in the electrolyte is 2%.

Specifically, the mass proportion of the total content of S element in the positive electrode plate and the negative electrode plate is not less than 100ppm.

Specifically, the positive electrode active materials include one or more of lithium iron phosphate, lithium manganese iron phosphate, lithium cobalt oxide, and ternary $LiNi_xCo_yMn_zO_2$ materials (where x+y+z=1, x ≥ y), accounting for 80-99% of the mass proportion of the positive electrode materials.

Specifically, the electrolyte consists of solvents, lithium salts, and sulfur containing additives. The lithium salt in the electrolyte is selected from one or more of organic electrolyte salts and inorganic electrolyte salts. For example, $LiPF_6$, $LiBF_4$, $LiSbF_6$, $LiAsF_6$, $LiTaF_6$, $LiAlCl_4$, $Li_2B_{10}Cl_{10}$, $Li_2B_{10}F_{10}$, $LiClO_4$, $LiCF_3SO_3$, lithium salts of chelated orthoborate and chelated orthophosphate, such as lithium bisoxalate borate [LiB(C2O4)2], lithium bismalonic borate [LiB(O2CCH2CO2)2], lithium bis(difluoromalonato) borate [LiB(O2CCF2CO2)2], lithium (malonatooxalato) borate [LiB(C2O4)(O2CCH2CO2)],lithium (difluoromalonatooxalato) borate [LiB(C2O4)(O2CCF2CO2)], lithium trioxalate phosphate [LiP(C2O4)3], and lithium tris(difluoromalonato) phosphate [LiP(O2CCF2CO2)3], as well as any combination of two or more of the aforementioned lithium salts.

Specifically, in other embodiments, the lithium salt is selected from one or more of fluorine containing lithium salts, such as hexafluorophosphate, hexafluoroarsenate, perchlorate, lithium trifluorosulfonyl, lithium difluoro (trifluoromethylsulfonyl) imide, lithium bis (fluorosulfonyl) imide and lithium tris (trifluoromethylsulfonyl) methyl.

Specifically, the concentration of lithium salts in the electrolyte ranges from 0.5M to 2M. When the concentration of lithium salt is too low, the conductivity of the electrolyte is low, which will affect the rate and cycle performance of the entire battery system; When the concentration of lithium salt is too high, the viscosity of the electrolyte is too high, which is also not conducive to the improvement of the overall rate of the battery system. In a more preferred embodiment, the concentration of the lithium salt ranges from 0.9M to 1.3M.

Specifically, the solvent is selected from non aqueous organic solvents. In a preferred embodiment, the solvent of the electrolyte is selected from two or more of ethylene carbonate, propylene carbonate, dimethyl carbonate, diethyl carbonate, ethyl methyl carbonate, methyl formate, ethyl formate, ethyl propionate, propyl propionate, methyl butyrate, and tetrahydrofuran.

Specifically, the electrolyte also includes other additives that promote the formation of SEI films, including but not limited to: viaylene carbonate and its derivatives, ethylene carbonate derivatives with non conjugated unsaturated bonds in their side chains, halogenated cyclic carbonates, and salts of chelated orthoborate and chelated orthophosphate. In a preferred embodiment, the additive includes one or more of vinylene carbonate, vinyl ethylene carbonate, methylene ethylene carbonate, fluoroethylene carbonate, trifluoromethyl ethylene carbonate, and double fluoro ethylene carbonate.

The negative electrode plate includes a negative electrode current collector and a negative electrode material located on the negative electrode current collector, wherein the negative electrode material includes a negative electrode active material, a negative electrode adhesive, and a negative electrode conductive agent.

The negative electrode active material is selected from graphite and/or silicon, such as one or more of natural graphite, artificial graphite, Mesophase Carbon Microbeads (referred to as MCMB), hard carbon, soft carbon, silicon, silicon-carbon composites, Li-Sn alloys, Li-Sn-O alloys, Sn, SnO, $SnO_2$, spinel structured lithiated $TiO_2$-$Li_4Ti_5O_{12}$, or Li-Al alloys.

The lithium-ion battery of the present invention significantly improves its first efficiency with the addition of lithium supplement additive $Li_xM_yO_z$ to the positive electrode plate, and the first efficiency increases with the increase of the addition amount. The introduction of sulfur containing additives can participate in the formation of SEI films. When

sulfur containing additives are used together with lithium supplement additive $Li_xM_yO_z$, it can significantly improve the thermal stability of the battery, especially the high-temperature storage and cycle performance. This is mainly related to lithium supplement additives which improve the first efficiency and sulfur containing additives which protect the positive electrode surface. Lithium supplement additives improve the first efficiency, and the introduction of sulfur containing additives can participate in the formation of SEI films. The two work synergistically to improve the first efficiency of the battery and generate a passivation film at the positive electrode. The passivation film shows good thermal stability in extreme environments, effectively stabilizing the system, and improving high-temperature performance and high-temperature cycle performance.

The present invention will be further explained through embodiments below.

Example

This embodiment is used to illustrate the Lithium-ion battery disclosed in the present invention and its preparation method, including the following operational steps:

Preparation of electrolyte:

mixing EC, DEC, and PC in a mass proportion of 1:1:1 as an organic solvent;
adding an additive with a mass percentage content as shown in Example 1 in Table 1 to the organic solvent; and
mixing well, and then adding $LiPF_6$ to obtain an electrolyte with a $LiPF_6$ concentration of 1.1 mol/L.

Production of the positive electrode plate:

adding the positive electrode active material $LiCoO_2$, conductive agent CNT (Carbon Nanotube), adhesive PVDF (Polyvinylidene Fluoride), and lithium supplement additive in a mass proportion of 95:1.5:1.5:2, wherein table 1 shows the amount of lithium supplement additive added in the embodiment, which is 97% of the total amount of the positive electrode active material;
stirring and mixing thoroughly in N-methylpyrrolidone solvent to form a uniform positive electrode slurry; and
applying this slurry to the positive electrode current collector aluminum foil, drying, and cold pressing to obtain the positive electrode plate.

Production of the negative electrode plate:

thoroughly stirring and mixing the negative electrode active material graphite,
conductive agent acetylene black, adhesive styrene butadiene rubber, and thickener sodium carboxy methyl cellulose in a mass proportion of 96:1.2:1.5:1.3 in an appropriate amount of deionized water solvent to form a uniform negative electrode slurry; and
applying this slurry onto the negative electrode current collector copper foil, drying, and cold pressing to obtain the negative electrode plate.

Production of lithium-ion batteries:

using PE porous polymer film as the separator;
stacking the positive electrode plate, separator, and negative electrode plate in sequence, so that the separator is in the middle of the positive and negative electrodes to provide isolation; then, winding the stacked electrode plates and separator to obtain a coil core; placing the coil core in the aluminum plastic film bag formed by punching, injecting the electrolyte obtained from the above preparation into the baked and dried battery cells; and completing the preparation of lithium-ion batteries through vacuum packaging, standing, and formation processes.

Table 1

| Test number | Lithium supplement additive | | Electrolyte additive | |
|---|---|---|---|---|
| | Type | Mass percentage content | Type | Mass percentage content |
| Comparative example 1 | / | / | / | / |
| Comparative example 2 | $Li_2NiO_2$ | 1% | / | / |

(continued)

| Test number | Lithium supplement additive | | Electrolyte additive | |
|---|---|---|---|---|
| | Type | Mass percentage content | Type | Mass percentage content |
| Comparative example 3 | / | / | PS | 2% |
| Comparative example 4 | / | / | PES | 2% |
| Comparative example 5 | / | / | DTD | 2% |
| Comparative example 6 | / | / | MMDS | 2% |
| Comparative example 7 | $Li_2NiO_2$ | 1% | PS | 2% |
| Embodiment 1 | $Li_2NiO_22$ | 3% | PS | 2% |
| Embodiment 2 | $Li_2NiO_2$ | 1% | PS | 0.05% |
| Embodiment 3 | $Li_2NiO_2$ | 1% | PS | 5% |
| Embodiment 4 | $Li_5FeO_4$ | 1% | PS | 2% |
| Embodiment 5 | $Li_2NiO_2$ | 5% | PS | 2% |
| Embodiment 6 | $Li_2NiO_2$ | 3% | PES | 2% |
| Embodiment 7 | $Li_2NiO_2$ | 3% | DTD | 2% |
| Embodiment 8 | $Li_2NiO_2$ | 3% | MMDS | 2% |

Where, PS is 1,3-propane sultone, which is one of the specific compounds of formula II; PES is propenyl-1,3-sultone, which is one of the specific compounds of formula II; DTD is ethylene sulfate, which is one of the specific compounds of formula I; MMDS is methylene methanedisulfonate, which is one of the specific compounds of formula III.

Battery testing:

First battery efficiency test

After filling the battery with electrolyte and allowing it to stand for a period of time, charge it in an environment of 25 ± 2 °C. Firstly, use a charging current of 0.02C and a charging time of 2H; Next, charge with a current of 0.1C for 5H, and finally charge with a constant current of 0.5C and with a constant voltage to 4.45V, with a cut-off current of 0.02C. Discharge at 0.2C until the discharge cut-off voltage is 3.0V The final first efficiency EF=DC/(CC+CV), where DC is the discharge capacity and CC+CV is the constant current capacity plus constant voltage section capacity for charging.

45 °C cycle test:

The testing method is to charge the lithium-ion battery with a constant current of 1C and with a constant voltage to 4.45V in a 45 ± 2 °C incubator, with a cut-off current of 0.05C, and then discharge it at 1C to 3V Repeat multiple charging and discharging cycles according to the above conditions. Calculate the capacity retention rate after 300 and 500 battery cycles, with 5 batteries in each group.

Capacity retention rate (%)=discharge capacity of the corresponding number of cycles (mAh)/discharge capacity of the third cycle (mAh)*100%

The average capacity retention rate of each group of 5 batteries after different cycles is recorded in Table 2.

Table 2

| Test number | First efficiency-EF | 45 degree cycles-300 times | 45 degree cycles-500 times |
|---|---|---|---|
| Comparative example 1 | 90.80% | 70.1% | 51.1% |
| Comparative example 2 | 92.50% | 79.2% | 61.8% |
| Comparative example 3 | 90.30% | 77.2% | 56.3% |
| Comparative example 4 | 89.60% | 81.3% | 63.5% |
| Comparative example 5 | 90.50% | 73.2% | 52.1% |
| Comparative example 6 | 90.10% | 78.5% | 57.9% |
| Comparative example 7 | 91.80% | 90.0% | 80.8% |
| Embodiment 1 | 93.40% | 92.5% | 83.2% |
| Embodiment 2 | 92.20% | 83.5% | 65.8% |
| Embodiment 3 | 91.30% | 91.6% | 82.3% |
| Embodiment 4 | 93.30% | 93.8% | 85.1% |
| Embodiment 5 | 92.60% | 95.5% | 87.1% |
| Embodiment 6 | 92.80% | 94.8% | 86.2% |
| Embodiment 7 | 93.80% | 91.5% | 82.3% |
| Embodiment 8 | 93.50% | 93.6% | 84.5% |

Based on the data from Tables 1 and 2, it can be seen that compared to Comparative example 1, adding 1% lithium supplement additive Li2NiO2 in Comparative example 2 increases the initial efficiency of the battery by 1.7%, and slightly improves the cycle performance. For Comparative examples 3-6, adding sulfur containing additives reduces the first efficiency, but improves the cycle performance. For Comparative example 7, adding lithium supplement additive $Li_2NiO_2$ and sulfur containing additive PS can significantly improve the cycle performance. Compared with the Comparative example 7, Embodiments 1-3 adjusted the content of lithium supplement additive $Li_2NiO_2$ and sulfur containing additive PS, and as the content of lithium supplement and PS increased, the cycle performance improved. The comprehensive effect of $Li_5FeO_4$ in Example 4 on improving first efficiency and cycle performance is superior to $Li_2NiO_2$.

The above content is a further detailed explanation of the present invention in conjunction with specific optional embodiments, and it cannot be considered that the specific implementation of the present invention is limited to these explanations. For ordinary skilled in the art to which the present invention belongs, without departing from the concept of the present invention, several simple deductions or substitutions can be made, which should be considered as falling within the scope of protection of the present invention.

## Claims

**1.** A lithium-ion battery, comprising:

a positive electrode plate, a negative electrode plate, a separator, and an electrolyte;
the positive electrode plate includes a positive electrode current collector and a positive electrode material, the positive electrode material includes a lithium supplement additive $Li_xM_yO_z$, where $1 \leq x \leq 6$, $1 \leq y \leq 6$, $2 \leq z \leq 12$, and M includes one or more of Ni, Co, Fe, Cu, Al, Mn, Ti, P, Si, C;
the lithium supplement additive $Li_xM_yO_z$ includes one or more types;
the electrolyte includes a sulfur containing additive, which is selected from one or more of the following formulas I-V; and/or
one or more of halogenated compounds of the following formulas I-V;

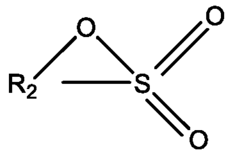

Formula I

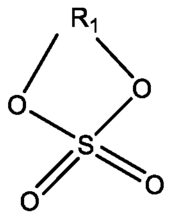

Formula II

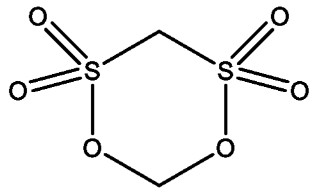

Formula III

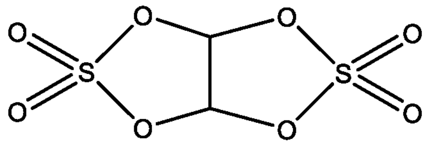

Formula IV

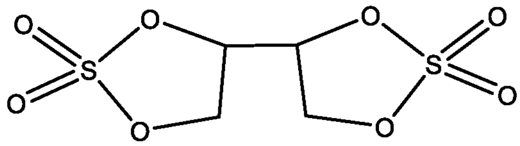

Formula V

where, in formula I, R1 is selected from one of substituted or unsubstituted C1-6 alkylene group and substituted or unsubstituted C2-6 alkenylene group;
in formula II, R2 is selected from one of substituted or unsubstituted C1-6 alkylene group and substituted or unsubstituted C2-6 alkenylene group.

**2.** The lithium-ion battery as claimed in claim 1, wherein the mass proportion of the lithium supplement additive in the positive electrode material is 0.01-10%.

**3.** The lithium-ion battery as claimed in claim 2, wherein the mass proportion of the sulfur containing additive in the electrolyte is 0.01-10%.

**4.** The lithium-ion battery as claimed in claim 3, wherein the mass proportion of the sulfur containing additive in the electrolyte is 0.05-5%.

**5.** The lithium-ion battery as claimed in claim 4, wherein the lithium supplement additive is $Li_5FeO_4$, and the mass proportion of $Li_2NiO_2$ in the positive electrode plate is 1%; the sulfur containing additive is 1,3-propane sultone, and the mass proportion of 1,3-propane sultone in the electrolyte is 2%.

**6.** The lithium-ion battery as claimed in claim 1, wherein the mass proportion of the total content of S element in the positive electrode plate and the negative electrode plate is not less than 100ppm.

**7.** The lithium-ion battery as claimed in claim 1, wherein the mass proportion of the positive electrode active material in the positive electrode material is 80-99%.

**8.** The lithium-ion battery as claimed in claim 1, wherein the concentration of lithium salts in the electrolyte ranges from 0.5M to 2M.

**9.** The lithium-ion battery as claimed in claim 8, wherein the concentration of lithium salts in the electrolyte ranges from 0.9M to 1.3M.

**10.** The lithium-ion battery as claimed in claim 2, wherein the mass proportion of the lithium supplement additive in the positive electrode material is 1%.

**INTERNATIONAL SEARCH REPORT**

International application No. **PCT/CN2022/118744**

**A. CLASSIFICATION OF SUBJECT MATTER**

H01M 4/62(2006.01)i; H01M 10/0567(2010.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABSC; VEN; ENTXT; ENTXTC; CNKI; STN: 补锂, 添加剂, 电解液, 硫酸酯, 磺酸酯, 环, lithium supplement, additive, electrolyte, sulphate, sulfonate, sulphonate, cycle

**C. DOCUMENTS CONSIDERED TO BE RELEVANT**

| Category* | Citation of document, with indication, where appropriate, of the relevant passages | Relevant to claim No. |
|---|---|---|
| E | CN 115498258 A (SHENZHEN DEFANGCHUANGYU NEW ENERGY TECHNOLOGY CO., LTD.) 20 December 2022 (2022-12-20) description, paragraphs 20-109 | 1-4, 7-9 |
| PX | CN 114725392 A (HIGHPOWER TECHNOLOGY (HUIZHOU) CO., LTD.) 08 July 2022 (2022-07-08) description, paragraphs 4-63 | 1-10 |
| PX | CN 114766067 A (NINGDE AMPEREX TECHNOLOGY LTD.) 19 July 2022 (2022-07-19) description, paragraphs 48-189 | 1-10 |
| X | CN 112490490 A (SHENZHEN BAK POWER BATTERY CO., LTD.) 12 March 2021 (2021-03-12) description, paragraphs 4-70 | 1-10 |
| X | CN 107104245 A (NANJING AMPRIUS CO., LTD.) 29 August 2017 (2017-08-29) description, paragraphs 13-147 | 1-10 |
| X | CN 113328081 A (ZHUHAI COSMX BATTERY CO., LTD.) 31 August 2021 (2021-08-31) description, paragraphs 5-97 | 1-10 |
| X | CN 108807980 A (SOUND GROUP CO., LTD. et al.) 13 November 2018 (2018-11-13) description, paragraphs [0005]-[0056] | 1-10 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 January 2023** | **19 January 2023** |
| Name and mailing address of the ISA/CN<br>**China National Intellectual Property Administration (ISA/CN)**<br>**No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/118744**

**C. DOCUMENTS CONSIDERED TO BE RELEVANT**

| Category* | Citation of document, with indication, where appropriate, of the relevant passages | Relevant to claim No. |
|---|---|---|
| X | CN 110224169 A (AMPRIUS NANJING CO., LTD.) 10 September 2019 (2019-09-10) description, paragraphs 14-143 | 1-10 |
| X | JP 2019061750 A (TOYOTA INDUSTRIES CORP.) 18 April 2019 (2019-04-18) description, paragraphs 16-166 | 1-10 |
| A | CN 109950621 A (SHENZHEN CAPCHEM TECHNOLOGY CO., LTD.) 28 June 2019 (2019-06-28) entire document | 1-10 |
| A | CN 107851847 A (CENTRAL GLASS CO., LTD.) 27 March 2018 (2018-03-27) entire document | 1-10 |

Form PCT/ISA/210 (second sheet) (January 2015)

**INTERNATIONAL SEARCH REPORT**
**Information on patent family members**

International application No.
**PCT/CN2022/118744**

| Patent document cited in search report | | | Publication date (day/month/year) | Patent family member(s) | | | Publication date (day/month/year) |
|---|---|---|---|---|---|---|---|
| CN | 115498258 | A | 20 December 2022 | None | | | |
| CN | 114725392 | A | 08 July 2022 | None | | | |
| CN | 114766067 | A | 19 July 2022 | None | | | |
| CN | 112490490 | A | 12 March 2021 | None | | | |
| CN | 107104245 | A | 29 August 2017 | None | | | |
| CN | 113328081 | A | 31 August 2021 | None | | | |
| CN | 108807980 | A | 13 November 2018 | None | | | |
| CN | 110224169 | A | 10 September 2019 | CN | 110224169 | B | 14 September 2021 |
| JP | 2019061750 | A | 18 April 2019 | None | | | |
| CN | 109950621 | A | 28 June 2019 | WO | 2019119765 | A1 | 27 June 2019 |
| | | | | US | 2020313237 | A1 | 01 October 2020 |
| | | | | EP | 3731325 | A1 | 28 October 2020 |
| | | | | EP | 3731325 | B1 | 29 December 2021 |
| | | | | CN | 109950621 | B | 03 May 2022 |
| CN | 107851847 | A | 27 March 2018 | WO | 2017026181 | A1 | 16 February 2017 |
| | | | | US | 2020212485 | A1 | 02 July 2020 |
| | | | | EP | 3333962 | A1 | 13 June 2018 |
| | | | | JP | 2017037808 | A | 16 February 2017 |
| | | | | KR | 20180038038 | A | 13 April 2018 |
| | | | | JP | 6098684 | B2 | 22 March 2017 |
| | | | | KR | 102016047 | B1 | 29 August 2019 |
| | | | | EP | 3333962 | B1 | 07 October 2020 |
| | | | | CN | 107851847 | B | 18 December 2020 |
| | | | | US | 11114693 | B2 | 07 September 2021 |

Form PCT/ISA/210 (patent family annex) (January 2015)